# EUROPÄISCHE PATENTSCHRIFT

(11) **EP 4 070 907 B1**
(45) Veröffentlichungstag und Bekanntmachung des Hinweises auf die Patenterteilung: **23.09.2026**
(21) Anmeldenummer: 22161233.6
(22) Anmeldetag: 10.03.2022
(51) Int. Cl.: B23K 26/03, B23K 26/24, B23K 26/38, B23K 31/12

(54) **VERFAHREN ZUR NORMIERUNG VON SENSORSIGNALEN FÜR DIE ÜBERWACHUNG EINES LASERBEARBEITUNGSPROZESSES, VERFAHREN ZUM ÜBERWACHEN EINES LASERBEARBEITUNGSPROZESSES UND LASERBEARBEITUNGSSYSTEM**
METHOD FOR STANDARDIZING SENSOR SIGNALS FOR MONITORING A LASER PROCESSING PROCESS, METHOD FOR MONITORING A LASER PROCESSING PROCESS AND LASER PROCESSING SYSTEM
PROCÉDÉ DE NORMALISATION DES SIGNAUX DE CAPTEUR POUR LA SURVEILLANCE D'UN PROCÉDÉ D'USINAGE LASER, PROCÉDÉ DE SURVEILLANCE D'UN PROCÉDÉ D'USINAGE LASER ET SYSTÈME D'USINAGE LASER

(30) Priorität: 25.03.2021 DE 102021107544
(43) Veröffentlichungstag der Anmeldung: 12.10.2022
(73) Patentinhaber: Precitec GmbH & Co. KG, 76571 Gaggenau-Bad Rotenfels (DE)
(72) Erfinder: OOI, Chiou Jian, 76571 Gaggenau (DE); PRUDNIKOV, Vitaly, 76571 Gaggenau (DE); SUPERNOK, Erik, 67483 Edesheim (DE); SCHAUER, Erich, 76456 Kuppenheim (DE)
(74) Vertreter: Ter Meer Steinmeister & Partner

(56) Entgegenhaltungen:
- DE-A1- 102019 111 501

## Beschreibung

Die Erfindung betrifft ein Verfahren zur Normierung von Sensorsignalen für die Überwachung eines Laserbearbeitungsprozesses, ein Verfahren zum Überwachen eines Laserbearbeitungsprozesses und ein Laserbearbeitungssystem, welches zur Durchführung des Verfahrens zum Überwachen eingerichtet ist.

### Hintergrund und Stand der Technik

In einem Laserbearbeitungssystem, auch als Laserbearbeitungsanlage oder kurz Anlage bezeichnet, wird zur Bearbeitung eines Werkstücks der von einer Laserstrahlquelle oder einem Ende einer Laserleitfaser austretende Laserstrahl mit Hilfe einer Strahlführungs- und Fokussieroptik auf ein zu bearbeitendes Werkstück fokussiert, um das Werkstück lokal auf Schmelztemperatur zu erhitzen. Die Bearbeitung kann ein Laserschweißen oder ein Laserschneiden umfassen. Das Laserbearbeitungssystem kann einen Laserbearbeitungskopf, beispielsweise einen Laserschweißkopf oder einen Laserschneidkopf, umfassen. Der Laserbearbeitungsprozess kann einen Laserschweißprozess und einen Laserschneidprozess umfassen.

Um die Qualität der Bearbeitung zu sichern, ist es wichtig, den Laserbearbeitungsprozess kontinuierlich zu überwachen. Die Überwachung erfolgt typischerweise durch Erfassung und Beurteilung von während des Laserbearbeitungsprozesses entstehenden Prozessemissionen. Die Prozessemissionen umfassen optische Prozessemissionen, z.B. die von dem Werkstück zurückgestreute oder zurückreflektierte Laserstrahlung und Prozessemissionen im infraroten Wellenlängenbereich des Lichts, wie Temperaturstrahlung, oder Prozessemissionen im sichtbaren Wellenlängenbereich des Lichts, wie Strahlung eines durch die Bearbeitung entstehenden Plasmas. Die optischen Prozessemissionen können als Prozessstrahlung bezeichnet werden. Die Prozessemissionen können ferner akustische Prozessemissionen umfassen.

Die Erfassung der Prozessemissionen erfolgt typischerweise durch zumindest einen Sensor, beispielsweise einer Photodiode. Der Sensor erfasst eine Intensität der Prozessemissionen bei einer vorgegebenen Wellenlänge oder in einem vorgegebenen Wellenlängenbereich und erzeugt ein entsprechendes Sensorsignal. Zur Überwachung wird das Sensorsignal beispielsweise mit vorgegebenen Hüllkurven und/oder Schwellwerten verglichen und es wird ein Fehler ausgegebenen, wenn das Sensorsignal außerhalb der Hüllkurven liegt oder einen Schwellwert über- oder unterschreitet.

Bei der Durchführung eines identischen Laserbearbeitungsprozesses durch verschiedene Exemplare eines gleichartigen oder identischen Typs eines Laserbearbeitungssystems treten Unterschiede oder Variationen in den entstehenden und/oder erfassten Prozessemissionen auf. Ursache dafür sind unter anderem Toleranzen in den verbauten Komponenten identischer Laserbearbeitungssysteme. Beispielsweise können eine Laserstrahlquelle, Ablenkeinheiten bzw. Scanner oder optische Elemente des Laserbearbeitungskopfes wie Linsen, Spiegel, etc., Herstellungstoleranzen aufweisen. Auch Toleranzen der Sensoreinheiten können zu Unterschieden in den erfassten Prozessemissionen führen. Entsprechende Sensorsignale können sich also von Laserbearbeitungssystem zu Laserbearbeitungssystem unterscheiden. Beispielsweise können sich mittlere Signalniveaus der Sensorsignale unterscheiden.

Diese Unterschiede in den Sensorsignalen machen einen Vergleich von identischen Laserbearbeitungssystemen schwierig oder unmöglich. Zudem können zur Überwachung eines vorgegebenen Laserbearbeitungsprozesses an identischen Laserbearbeitungssystemen nicht dieselben Parameter wie Hüllkurven oder Schwellwerte verwendet werden.

DE 10 2019 111501 A1 betrifft ein Verfahren zur Optimierung einer mit einer Laserbearbeitungsvorrichtung ausgeführten Laserbearbeitung, wobei im Zuge der Laserbearbeitung von einer Laserstrahlungsquelle Laserstrahlung erzeugt und entlang eines optischen Pfades in Richtung einer Arbeitsebene ausgesendet wird, wobei die Laserstrahlung mittels eines in dem optischen Pfad nachgelagert zur Laserstrahlungsquelle angeordneten Spatial Light Modulators moduliert wird, und wobei die modulierte Laserstrahlung auf die Arbeitsebene fokussiert wird, umfassend die folgenden, in einer closed-loop Regelschleife ausgeführten Schritte: i. Ermitteln von zumindest einem Ist-Merkmal der Laserstrahlung und/oder der modulierten Laserstrahlung unter Einsatz von zumindest einer Kameraeinheit; ii. Vergleichen des zumindest einen Ist-Merkmals der Laserstrahlung und/oder der modulierten Laserstrahlung mit zumindest einem vorgegebenen Soll-Merkmal und Bestimmen einer jeweiligen Merkmalsabweichung; iii. Bewerten der Merkmalsabweichung und gegebenenfalls Anpassen zumindest eines Stellparameters.

### Offenbarung der Erfindung

Es ist daher eine Aufgabe der vorliegenden Offenbarung, ein Verfahren anzugeben, mit dem identische oder gleichartige Laserbearbeitungssysteme bzw. identische oder gleichartige Laserbearbeitungsprozesse vergleichbar werden.

Es ist ferner eine Aufgabe der vorliegenden Offenbarung, ein Verfahren anzugeben, mit dem die Überwachung eines identischen Laserbearbeitungsprozesses mit identischen Überwachungsparametern an identischen oder gleichartigen Laserbearbeitungssystemen ermöglicht wird. Insbesondere ist es eine Aufgabe der vorliegenden Offenbarung, ein Verfahren anzugebenen, mit dem Sensorsignale eines Prozessüberwachungssystems normiert werden können.

Es ist ferner eine Aufgabe der vorliegenden Offenbarung, ein Laserbearbeitungssystem anzugeben, welches eingerichtet ist, um ein derartiges Verfahren durchzuführen. Zudem ist es eine Aufgabe der vorliegenden Offenbarung, ein Verfahren zur Überwachung eines vorgegebenen Laserbearbeitungsprozesses mit normierten Sensorsignalen anzugeben.

Eine oder mehrere dieser Aufgaben werden gelöst durch den Gegenstand der unabhängigen Ansprüche. Vorteilhafte Ausgestaltungen und Weiterbildungen sind Gegenstand abhängiger Ansprüche.

Die Erfindung beruht auf dem Gedanken, Sensorsignale für die Überwachung eines Laserbearbeitungsprozesses, die auf erfassten Prozessemissionen, insbesondere optischen Prozessemissionen, des Laserbearbeitungsprozesses basieren, durch Skalierung zu normieren. Zur Kalibrierung wird ein vorgegebener Laserbearbeitungsprozess durch ein Laserbearbeitungssystem durchgeführt und basierend auf den erzeugten Prozessemissionen wird ein Sensorsignal erzeugt. Auf Grundlage des erzeugten Sensorsignals werden Skalierungsfaktoren für diesen vorgegebenen Laserbearbeitungsprozess und für dieses Laserbearbeitungssystem bestimmt. Die Skalierungsfaktoren werden anschließend dazu verwendet, um Sensorsignale bei der Überwachung von nachfolgenden, identischen Laserbearbeitungsprozessen an demselben Laserbearbeitungssystem zu skalieren (Autoskalierung).

Durch das Normieren werden die bei der Durchführung des Laserbearbeitungsprozesses durch mehrere identische Laserbearbeitungssysteme erzeugten Sensorsignale unter diesen Laserbearbeitungssystemen vergleichbar. Demnach können Unterschiede in den erzeugten Sensorsignalen zwischen den identischen Laserbearbeitungssystemen durch das Normieren ausgeglichen werden. Somit können zur Überwachung des identischen Laserbearbeitungsprozesses dieselben Überwachungsparameter bzw. dasselbe Überwachungsverfahren bzw. - programm an allen der identischen oder baugleichen Laserbearbeitungssysteme verwendet werden.

Identische oder gleichartige Laserbearbeitungssysteme bedeuten im Rahmen der vorliegenden Offenbarung mehrere Exemplare desselben oder gleicharten Typs eines vorgegebenen Laserbearbeitungssystems oder baugleiche Exemplare eines Laserbearbeitungssystems. Identische oder dieselben Laserbearbeitungsprozesse bedeuten Laserbearbeitungsprozesse, die mit identischen Prozessparametern wie ein vorgegebener Laserbearbeitungsprozess durchgeführt werden oder wurden.

Gemäß einem ersten Aspekt der vorliegenden Offenbarung ist ein Verfahren zur Normierung von Sensorsignalen für die Überwachung eines Laserbearbeitungsprozesses angegeben, umfassend die Schritte: Durchführen eines vorgegebenen Laserbearbeitungsprozesses mittels eines Laserbearbeitungssystems zum Bearbeiten von zumindest einem Werkstück, wobei der Laserbearbeitungsprozess das Bearbeiten zumindest eines Bearbeitungsbereichs umfasst; Erzeugen eines ersten Sensorsignals basierend auf für den Bearbeitungsbereich durch einen ersten Sensor erfassten Prozessemissionen, Bestimmen eines ersten Mittelwerts des ersten Sensorsignals, Bestimmen eines ersten Skalierungsfaktors für das erste Sensorsignal für den Bearbeitungsbereich basierend auf dem ersten Mittelwert.

Der vorgegebene Laserbearbeitungsprozess kann das Bearbeiten des zumindest einen Werkstücks durch Einstrahlen eines Laserstrahls entlang eines vorgegebenen Bearbeitungspfads umfassen oder definieren. Der vorgegebene Bearbeitungspfad kann bezüglich des zumindest einen Werkstücks, insbesondere bezüglich der Oberfläche eines oder mehrerer Werkstücke definiert sein. Der zumindest eine Bearbeitungsbereich des Laserbearbeitungsprozesses kann einen Bereich des zumindest einen Werkstücks angeben, auf den der Laserstrahl eingestrahlt wird. Der zumindest eine Bearbeitungsbereich kann einem Pfadabschnitt des vorgegebenen Bearbeitungspfads auf dem Werkstück entsprechen. Der Pfadabschnitt kann durch einen Startpunkt entlang des Bearbeitungspfads und einem Endpunkt entlang des Bearbeitungspfad definiert sein, oder kann durch einen Startpunkt entlang des Bearbeitungspfads und eine Länge entlang des Bearbeitungspfads definiert sein.

Der Laserbearbeitungsprozess kann ein Laserschweißen, auch Laserschweißprozess genannt, umfassen. In diesem Fall kann das Bearbeiten eines Bearbeitungsbereichs das Ausbilden zumindest einer Schweißnaht entsprechen.

Der Laserbearbeitungsprozess kann alternativ oder zusätzlich ein Laserschneiden, auch Laserschneidprozess genannt, umfassen. In diesem Fall kann das Bearbeiten des zumindest einen Bearbeitungsbereichs dem Ausbilden einer oder mehrerer Schnittkanten entsprechen. Der zumindest eine Bearbeitungsbereich kann auch einem Einstechloch des Laserschneidprozesses entsprechen. In diesem Fall kann das Bearbeiten des Bearbeitungsbereichs einen Einstechvorgang, d.h. das Ausbilden des Einstichlochs, umfassen.

Die beim Durchführen des Laserbearbeitungsprozesses entstehenden Prozessemissionen können optische Prozessemissionen umfassen, insbesondere zumindest eine der folgenden: eine Temperaturstrahlung im infraroten Wellenlängenbereich, eine Plasmastrahlung im sichtbaren Wellenlängenbereich und eine von dem Werkstück reflektierte Laserstrahlung. Die reflektierte Laserstrahlung kann im infraroten Wellenlängenbereich oder im sichtbaren Wellenlängenbereich liegen.

Das erste Sensorsignal kann auf einer in einem vorgegebenen Wellenlängenbereich oder bei einer vorgegebenen Wellenlänge erfassten Intensität der Prozessemissionen basieren. Der erste Sensor kann also eine spektrale Empfindlichkeit in dem vorgegebenen Wellenlängenbereich oder bei der vorgegebenen Wellenlänge aufweisen. Beispielsweise kann das erste Sensorsignal auf der erfassten Intensität der Temperaturstrahlung, der erfassten Intensität der Plasmastrahlung und/oder der erfassten Intensität der reflektierten Laserstrahlung basieren.

Das erste Sensorsignal kann ein eindimensionales, zeitlich variables Signal sein. Das erste Sensorsignal kann eine Mehrzahl von Sensorwerten umfassen, wobei jeder Sensorwert einem jeweiligen Zeitpunkt zugeordnet ist. Ein Sensorwert kann der zum zugeordneten Zeitpunkt beim Bearbeiten eines Bearbeitungsbereichs erfassten Intensität der Prozessemissionen im vorgegebenen Wellenlängenbereich bzw. bei der vorgegebenen Wellenlänge entsprechen. Das erste Sensorsignal oder ein Abschnitt des Sensorsignals kann der Bearbeitung des Bearbeitungsbereichs zeitlich entsprechen. Mit anderen Worten kann das erste Sensorsignal auf Prozessemissionen basieren, die während der Bearbeitung des Bearbeitungsbereichs erfasst wurden.

Das Verfahren kann ferner umfassen: Erzeugen eines zweiten Sensorsignals basierend auf den für den Bearbeitungsbereich durch einen zweiten Sensor erfassten Prozessemissionen, Bestimmen eines zweiten Mittelwerts des zweiten Sensorsignals, Bestimmen eines zweiten Skalierungsfaktors für das zweite Sensorsignal für den Bearbeitungsbereich des Laserbearbeitungsprozesses basierend auf dem zweiten Mittelwert. Der erste Sensor und der zweite Sensor können sich in ihrem jeweiligen spektralen Empfindlichkeitsbereich unterscheiden.

Das Verfahren kann allgemein das Erzeugen von N Sensorsignalen basierend auf den für den Bearbeitungsbereich durch Sensoren erfassten Prozessemissionen und das Bestimmen von N entsprechenden Mittelwerten für den zumindest einen Bearbeitungsbereich umfassen, wobei N eine natürliche Zahl größer 1 ist. Die N Sensorsignale können sich in dem jeweiligen zugrundeliegenden Wellenlängenbereich bzw. der jeweiligen zugrundeliegenden Wellenlänge der erfassten Prozessemissionen unterscheiden. Für den Bearbeitungsbereich können also N Skalierungsfaktoren entsprechend N Sensorsignalen bestimmt werden. Die N Sensorsignale können gemäß Ausführungsformen von N entsprechenden Sensoren erzeugt werden. Gemäß weiterer Ausführungsformen können die N Sensorsignale von weniger als N Sensoren erzeugt werden. Beispielsweise kann ein einzelner Sensor eine spektrale Empfindlichkeit in mehreren Wellenlängenbereichen oder bei mehreren Wellenlängen aufweisen.

Das Verfahren kann das gleichzeitige Erzeugen mehrerer Sensorsignale basierend auf den bei der Bearbeitung eines Bearbeitungsbereichs emittierten Prozessemissionen umfassen. Vorzugsweise kann die Intensität der Prozessemissionen in einem ersten Wellenlängenbereich, beispielsweise in einem sichtbaren Wellenlängenbereich entsprechend einer Plasmastrahlung, in einem zweiten Wellenlängenbereich entsprechend einer reflektierten Laserstrahlung, und in einem dritten Wellenlängenbereich, beispielsweise in einem infraroten Wellenlängenbereich entsprechend einer Temperaturstrahlung, erfasst werden, und es können entsprechende erste bis dritte Sensorsignale erzeugt werden. In diesem Fall ist N = 3.

Die Sensoren können jeweils einen optischen Sensor, insbesondere eine Photodiode, umfassen. Die Photodiode kann ein zeitlich variables Spannungssignal ausgeben. Das zeitlich variable Spannungssignal kann vom jeweiligen Sensor oder einer Steuereinheit in das entsprechende Sensorsignal umgewandelt werden.

Der Laserbearbeitungsprozess kann gemäß Ausführungsformen das Bearbeiten von einem oder mehreren Bearbeitungsbereichen umfassen. Beispielsweise kann der Laserbearbeitungsprozess das Bearbeiten von M Bearbeitungsbereichen umfassen, wobei M eine natürliche Zahl größer 1 ist. Dabei können die Prozessemissionen für jeden der M Bearbeitungsbereiche erfasst werden und basierend auf den erfassten Prozessemissionen können entsprechende Sensorsignale erzeugt werden. Demnach können die Sensorsignale für jeden der M Bearbeitungsbereiche erzeugt werden. Es können also N Sensorsignale für jeden der M Bearbeitungsbereiche erzeugt werden. Beispielsweise kann der Laserbearbeitungsprozess das Bearbeiten von drei Bearbeitungsbereichen zum Ausbilden von drei Schweißnähten umfassen und das erste Sensorsignal und das zweite Sensorsignal können für jeden dieser drei Bearbeitungsbereiche erzeugt werden.

Das Verfahren kann ferner das Zuordnen der Sensorsignale zu den entsprechenden Bearbeitungsbereichen umfassen. Das Zuordnen kann manuell, beispielsweise durch einen Benutzer des Laserbearbeitungssystems, oder automatisch, beispielsweise durch eine Steuereinheit des Laserbearbeitungssystems erfolgen. Das Zuordnen der Sensorsignale zu den entsprechenden Bearbeitungsbereichen kann basierend auf einer vorgegebenen oder bekannten Anzahl der bearbeiteten Bearbeitungsbereiche, einer vorgegebenen oder bekannten Dauer für die Bearbeitung von jedem der Bearbeitungsbereiche und/oder einem vorgegebenen Startzeitpunkt und/oder Endzeitpunkt für die Bearbeitung von jedem der Bearbeitungsbereiche erfolgen.

Vorzugsweise wird der mindestens eine Skalierungsfaktor also für einen betrachteten, vorgegebenen Laserbearbeitungsprozess und ein betrachtetes Exemplar einer vorgegebenen Art von Laserbearbeitungssystemen bestimmt. Ferner wird ein einzelner Skalierungsfaktor jeweils für einen vorgegebenen Bearbeitungsbereich dieses Laserbearbeitungsprozesses und für eine Art von Sensorsignal bzw. für eine Art von Sensor mit einer spektralen Empfindlichkeit in einem vorgegebenen Wellenlängenbereich bzw. bei einer vorgegebenen Wellenlänge bestimmt.

Das Bestimmen des Skalierungsfaktors kann das Bestimmen eines Quotienten zwischen dem jeweiligen Mittelwert und einem entsprechenden Referenzwert umfassen. Beispielsweise kann das Bestimmen des ersten Skalierungsfaktors das Bestimmen des Quotienten zwischen einem ersten Referenzwert und dem ersten Mittelwert umfassen, und das Bestimmen des zweiten Skalierungsfaktors das Bestimmen des Quotienten zwischen einem zweiten Referenzwert und dem zweiten Mittelwert umfassen, und so weiter.

Das Bestimmen des Quotienten zwischen einem Referenzwert und einem Mittelwert kann das Dividieren des Mittelwerts durch den Referenzwert umfassen. Demnach kann der Skalierungsfaktor dimensionslos sein.

Vorzugsweise sind die Referenzwerte selbst Mittelwerte, die gemäß dem vorstehend beschriebenen Verfahren zur Normierung von Sensorsignalen für ein Referenz-Laserbearbeitungssystem bestimmt wurden. Das Referenz-Laserbearbeitungssystem kann mit dem betrachteten Laserbearbeitungssystem identisch oder baugleich sein.

Der Mittelwert kann ein arithmetischer Mittelwert oder ein geometrischer Mittelwert sein. Im Rahmen dieser Offenbarung kann der Mittelwert auch als ein Median definiert sein.

Das Bestimmen des jeweiligen Mittelwerts kann umfassen: Entfernen von Ausreißern, d.h. Entfernen der kleinsten Signalwerte und/oder Entfernen der größten Signalwerte, des jeweiligen Sensorsignals, und Bestimmen des Mittelwerts basierend auf den verbleibenden Signalwerten des Sensorsignals. Dies kann auch als Bereinigen des jeweiligen Sensorsignals bezeichnet werden.

Das Verfahren kann ferner umfassen: Wiederholen des Schritts zum Durchführen des vorgegebenen Laserbearbeitungsprozesses, Erzeugen eines entsprechenden ersten Sensorsignals für jede Wiederholung, Bestimmen eines entsprechenden ersten Mittelwerts für jede Wiederholung, und Bestimmen eines übergeordneten ersten Mittelwerts basierend auf den ersten Mittelwerten der Wiederholungen, wobei das Bestimmen des ersten Skalierungsfaktors basierend auf dem ersten übergeordneten Mittelwert erfolgt. Ferner kann das Verfahren umfassen: Erzeugen eines entsprechenden zweiten Sensorsignals für jede Wiederholung, Bestimmen eines entsprechenden zweiten Mittelwerts für jede Wiederholung, und Bestimmen eines übergeordneten zweiten Mittelwerts basierend auf den zweiten Mittelwerten der Wiederholungen, wobei das Bestimmen des zweiten Skalierungsfaktors basierend auf dem zweiten übergeordneten Mittelwert erfolgt. Das Verfahren kann entsprechende Schritte für das dritte Sensorsignal und so weiter aufweisen.

Das Wiederholen des Schritts zum Durchführen des vorgegebenen Laserbearbeitungsprozesses kann das Durchführen des identischen Laserbearbeitungsprozesses an weiteren Werkstücken und/oder das Durchführen des identischen Laserbearbeitungsprozesses an demselben zumindest einen Werkstück umfassen. Durch das Wiederholen der Schritte und dem wiederholten Durchführen des identischen Laserbearbeitungsprozesses können die Skalierungsfaktoren genauer und stabiler bestimmt werden.

Die Skalierungsfaktoren, insbesondere der erste Skalierungsfaktor und/oder zweite Skalierungsfaktor, können für eine Überwachung von nachfolgenden, Laserbearbeitungsprozessen, die zu dem vorgegebenen Laserbearbeitungsprozess identisch sind, gespeichert werden. Die Speicherung kann durch eine Steuereinheit erfolgen.

Vorzugsweise kann das Verfahren bei der Inbetriebnahme eines Laserbearbeitungssystems und/oder nach dem Austausch einer Komponente des Laserbearbeitungssystems durchgeführt werden. Die ausgetauschte Komponente kann eines der folgenden sein oder umfassen: ein Laserbearbeitungskopf, ein Prozessüberwachungssystem, ein optisches Element, eine Linse, eine Kollimationsoptik, eine Fokussieroptik, einen Spiegel, eine Ablenkeinheit zum Ablenken des Laserstrahls, eine Lichtleitfaser, ein Schutzglas, eine Laserstrahlquelle.

Gemäß einem weiteren Aspekt der vorliegenden Offenbarung ist ein Verfahren zum Überwachen eines Laserbearbeitungsprozesses angegeben, das Verfahren umfassend: Durchführen eines Laserbearbeitungsprozesses mittels eines Laserbearbeitungssystems zum Bearbeiten von zumindest einem Werkstück, wobei der Laserbearbeitungsprozess das Bearbeiten zumindest eines Bearbeitungsbereichs umfasst; Erzeugen eines ersten Sensorsignals basierend auf für den Bearbeitungsbereich durch einen ersten Sensor erfassten Prozessemissionen; Skalieren des ersten Sensorsignals mittels eines für dieses Laserbearbeitungssystem und diesen Laserbearbeitungsprozess bestimmten ersten Skalierungsfaktors, und Überwachen des Laserbearbeitungsprozesses anhand des mit dem ersten Skalierungsfaktor skalierten ersten Sensorsignals, wobei der erste Skalierungsfaktor durch ein Verfahren zur Normierung gemäß der vorliegenden Offenbarung bestimmt wurde. Das Überwachen kann anhand von zumindest einem vorgegebenen Überwachungsparameter für das erste Sensorsignal erfolgen.

Das Sensorsignal kann auch als Überwachungssensorsignal bezeichnet werden. Der Sensor kann auch als Überwachungssensor bezeichnet werden. Das Überwachen des Laserbearbeitungsprozesses anhand des skalierten ersten Sensorsignals kann ein Vergleichen des skalierten ersten Sensorsignals mit Überwachungsparametern umfassen.

Ferner kann das Verfahren zum Überwachen eines Laserbearbeitungsprozesses umfassen: das Erzeugen eines zweiten Sensorsignals basierend auf für den Bearbeitungsbereich durch einen zweiten Sensor erfassten Prozessemissionen; Skalieren des zweiten Sensorsignals mittels eines für dieses Laserbearbeitungssystem und diesen Laserbearbeitungsprozess bestimmten zweiten Skalierungsfaktors, und Überwachen des Laserbearbeitungsprozesses anhand des skalierten zweiten Sensorsignals, wobei der zweite Skalierungsfaktor durch ein Verfahren zur Normierung gemäß der vorliegenden Offenbarung bestimmt wurde. Ferner kann das Verfahren zum Überwachen des Laserbearbeitungsprozesses entsprechende Schritte für ein drittes Sensorsignal und so weiter umfassen. Das Überwachen kann anhand von zumindest einem vorgegebenen Überwachungsparameter für das zweite Sensorsignal erfolgen.

Das Skalieren des Sensorsignals umfasst vorzugsweise ein Dividieren des Sensorsignals durch den entsprechenden Skalierungsfaktor.

Alternativ oder zusätzlich kann das Verfahren zum Überwachen eines Laserbearbeitungsprozesses die folgenden Schritte umfassen: Skalieren des zumindest einen vorgegebenen Überwachungsparameters für das erste Sensorsignal mittels des für dieses Laserbearbeitungssystem und diesen Laserbearbeitungsprozess bestimmten ersten Skalierungsfaktors, und Überwachen des Laserbearbeitungsprozesses anhand des ersten Sensorsignals und anhand des zumindest einen basierend auf dem ersten Skalierungsfaktor skalierten Überwachungsparameters für das erste Sensorsignal.

Ferner kann das Verfahren zum Überwachen eines Laserbearbeitungsprozesses die folgenden Schritte umfassen: Skalieren des zumindest einen vorgegebenen Überwachungsparameters für das zweite Sensorsignal mittels des für dieses Laserbearbeitungssystem und diesen Laserbearbeitungsprozess bestimmten zweiten Skalierungsfaktors, und Überwachen des Laserbearbeitungsprozesses anhand des zweiten Sensorsignals und anhand des zumindest einen basierend auf dem zweiten Skalierungsfaktor skalierten Überwachungsparameters für das zweite Sensorsignal.

Das Skalieren des Überwachungsparameters umfasst vorzugsweise ein Multiplizieren des Überwachungsparameters mit dem entsprechenden Skalierungsfaktor.

Durch das Skalieren der Sensorsignale und/oder des jeweiligen zumindest einen Überwachungsparameters mittels für dieses Laserbearbeitungssystem und diesen Laserbearbeitungsprozess bestimmter Skalierungsfaktoren kann eine Überwachung des Laserbearbeitungsprozesses basierend auf Überwachungsparametern erfolgen, die für ein anderes Laserbearbeitungssystem ermittelt wurden, das zu diesem Laserbearbeitungssystem baugleich bzw. identisch ist, oder die für ein identisches oder baugleiches Referenz-Laserbearbeitungssystem ermittelt wurden. Die Überwachung des Laserbearbeitungsprozesses kann insbesondere basierend auf Überwachungsparametern, die für das Referenz-Laserbearbeitungssystem bestimmt wurden, durchgeführt werden.

Die Überwachungsparameter können vorgegebene obere und/oder untere Hüllkurven, obere und/oder untere Schwellwerte, Referenzverläufe und/oder Mittelwerte für die Sensorsignale umfassen. Die Überwachung kann insbesondere das Vergleichen der erzeugten Sensorsignale mit den Überwachungsparametern umfassen. Es kann ein Fehler ausgegeben werden, wenn das Sensorsignal außerhalb der Hüllkurven liegt oder einen Schwellwert über- oder unterschreitet.

Gemäß einem weiteren Aspekt der vorliegenden Offenbarung ist ein Laserbearbeitungssystem angegeben, welches eingerichtet ist, um das Verfahren zur Normierung von Sensorsignalen und/oder das Verfahren zum Überwachen eines Laserbearbeitungsprozesses gemäß Ausführungsformen der vorliegenden Offenbarung durchzuführen. Das Laserbearbeitungssystem umfasst: einen Laserbearbeitungskopf, eingerichtet zum Einstrahlen eines Laserstrahls auf zumindest ein Werkstück zum Durchführen eines Laserbearbeitungsprozesses, und ein Prozessüberwachungssystem, eingerichtet zum Überwachen des Laserbearbeitungsprozesses, umfassend eine Sensoreinheit mit zumindest einem Sensor zum Erfassen von Prozessemissionen, und eine Steuereinheit.

Die Steuereinheit kann eingerichtet sein, um das Laserbearbeitungssystem zu steuern, um das Verfahren zur Normierung von Sensorsignalen und/oder das Verfahren zum Überwachen des Laserbearbeitungsprozesses gemäß Ausführungsformen der vorliegenden Offenbarung durchzuführen. Die Steuereinheit kann eingerichtet sein, um den Laserbearbeitungskopf, die Sensoreinheit und/oder den zumindest einen Sensor zu steuern.

Die Sensoreinheit umfasst zumindest einen Sensor zum Erfassen oder Detektieren von Prozessemissionen des Laserbearbeitungsprozesses. Der Sensor kann zumindest eine Photodiode und/oder ein Photodiodenarray und/oder eine Kamera, beispielsweise eine CMOS- oder CCD-basierte Kamera, und/oder einen akustischen Sensor und/oder einen Schallsensor und/oder einen Drucksensor umfassen.

Der Sensor kann eingerichtet sein, um eine Intensität in einem vorgegebenen Wellenlängenbereich oder bei einer vorgegebenen Wellenlänge zu detektieren. Der Sensor kann eine spektrale Empfindlichkeit in dem vorgegebenen Wellenlängenbereich oder bei einer vorgegebenen Wellenlänge aufweisen. Der Sensor kann nur bei einer bestimmten Wellenlänge oder in einem bestimmten Wellenlängenbereich sensitiv sein. Alternativ kann der Sensor auch in mehreren vorgegebenen Wellenlängenbereichen oder bei mehreren vorgegebenen Wellenlängen sensitiv sein. Der Sensor kann ferner eingerichtet sein, um basierend auf den erfassten Prozessemissionen ein Sensorsignal gemäß Ausführungsformen der vorliegenden Offenbarung auszugeben.

Vorzugsweise umfasst die Sensoreinheit einen ersten Sensor, der eingerichtet ist, um ein erstes Sensorsignal basierend auf der erfassten Intensität einer von dem Werkstück emittierten Plasmastrahlung zu erzeugen, einen zweiten Sensor, der eingerichtet ist, um ein zweites Sensorsignal basierend auf der erfassten Intensität einer von dem Werkstück reflektierten Laserstrahlung zu erzeugen, und/oder einen dritten Sensor, der eingerichtet ist, um ein drittes Sensorsignal basierend auf der erfassten Intensität einer von dem Werkstück Temperaturstrahlung zu erzeugen.

Der Laserbearbeitungskopf kann ein Laserschweißkopf oder ein Laserschneidkopf sein. Die Sensoreinheit und/oder der zumindest eine Sensor kann an einem Gehäuse des Laserbearbeitungskopfes montiert oder angeordnet sein.

Die durch den Laserbearbeitungsprozess erzeugten Prozessemissionen können in den Laserbearbeitungskopf, insbesondere in das Gehäuse, eintreten. Der Laserbearbeitungskopf kann einen Strahlteiler zum Auskoppeln der Prozessemissionen aus dem Gehäuse und dem Strahlengang des Laserstrahls aufweisen. Ein Strahlengang der Prozessemissionen zwischen dem zumindest einen Werkstück und dem zumindest einen Sensor kann demnach zumindest teilweise innerhalb des Laserbearbeitungskopfes und/oder koaxial mit dem Strahlengang des Laserstrahls verlaufen. Alternativ kann die Sensoreinheit bzw. der Sensor so angeordnet sein, dass ein Strahlengang der Prozessemissionen zwischen dem zumindest einen Werkstück und dem Sensor vollständig außerhalb des Laserbearbeitungskopfes verläuft.

Die Steuereinheit kann eingerichtet sein, um ein Sensorsignal von dem zumindest einen Sensor bzw. von der Sensoreinheit zu empfangen. Alternativ oder zusätzlich kann der zumindest eine Sensor ein analoges Spannungssignal ausgeben und die Steuereinheit kann eingerichtet sein, um ein analoges Spannungssignal von dem zumindest einen Sensor zu empfangen, und um das analoge Spannungssignal in ein Sensorsignal gemäß Ausführungsformen der vorliegenden Offenbarung umzuwandeln.

Der von der Laserstrahlquelle emittierte Laserstrahl kann eine Wellenlänge im infraroten Spektralbereich, insbesondere in einem Bereich zwischen 1030 nm und 1070 nm, oder im sichtbaren grünen Spektralbereich, insbesondere in einem Bereich zwischen 500 nm und 570 nm, vorzugsweise bei 515 nm, oder im sichtbaren blauen Spektralbereich, insbesondere in einem Bereich von 400 nm bis 500 nm, oder in einem Bereich zwischen 440 nm und 460 nm, vorzugsweise bei 450 nm, umfassen.

### Kurzbeschreibung der Zeichnungen

Die Erfindung wird im Folgenden anhand von Figuren im Detail beschrieben.
Fig. 1A zeigt eine schematische Darstellung eines Laserbearbeitungssystems zum Durchführen eines Laserbearbeitungsprozesses und zum Überwachen des Laserbearbeitungsprozesses gemäß Ausführungsformen;
Fig. 1B zeigt eine schematische Darstellung eines Laserbearbeitungssystems zum Durchführen eines Laserbearbeitungsprozesses und zum Überwachen des Laserbearbeitungsprozesses gemäß weiterer Ausführungsformen;
Fig. 2 zeigt eine schematische Darstellung zweier zu bearbeitender Werkstücke in Draufsicht mit einem Bearbeitungspfad und Bearbeitungsbereichen;
Fig. 3 zeigt ein Flussdiagramm eines Verfahrens zur Normierung von Sensorsignalen für die Überwachung eines Laserbearbeitungsprozesses;
Fig. 4A zeigt eine schematische Darstellung zweier zu bearbeitender Werkstücke in Draufsicht mit drei Bearbeitungspfaden;
Fig. 4B zeigt eine schematische Darstellung von drei Gruppen von jeweils zwei zu bearbeitenden Werkstücken in Draufsicht mit jeweils einem Bearbeitungspfad;
Fig. 5A zeigt Verläufe von Überwachungssensorsignalen ohne Skalierung;
Fig. 5B zeigt Verläufe von Überwachungssensorsignale, die mit Skalierungsfaktoren skaliert wurden.

### Detaillierte Beschreibung der Zeichnungen

Im Folgenden werden, sofern nicht anders vermerkt, für gleiche und gleichwirkende Elemente dieselben Bezugszeichen verwendet.

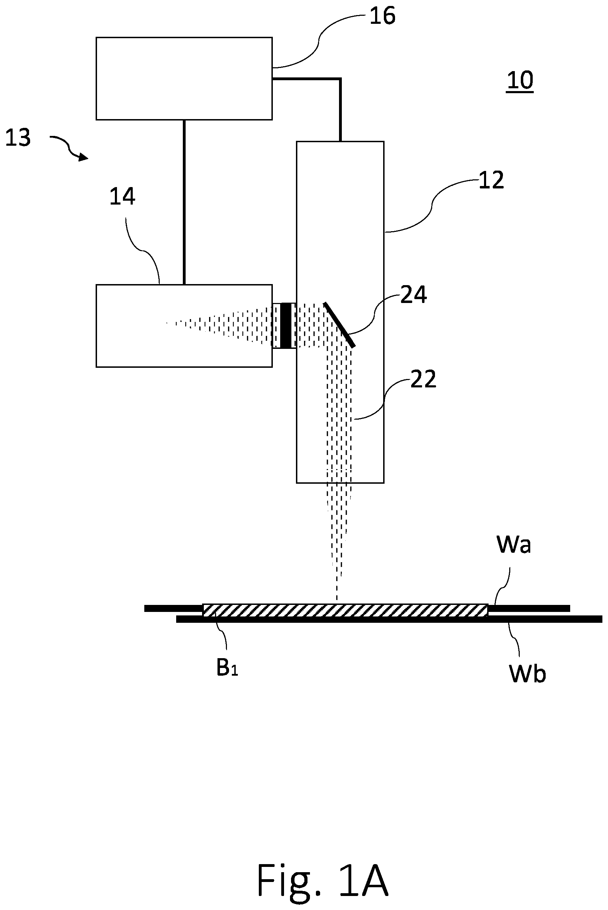

Fig. 1A zeigt eine schematische Darstellung eines Laserbearbeitungssystems zum Durchführen eines Laserbearbeitungsprozesses und zum Überwachen des Laserbearbeitungsprozesses gemäß Ausführungsformen.

Das Laserbearbeitungssystem 10 umfasst einen Laserbearbeitungskopf 12 und ein Prozessüberwachungssystem 13 mit einer Sensoreinheit 14 und einer Steuereinheit 16. Im Folgenden werden Ausführungsformen beschrieben, in denen der Laserbearbeitungskopf 12 als Schweißkopf ausgebildet ist, und in denen das Laserbearbeitungssystem 10 eingerichtet ist, um einen Laserschweißprozess durchzuführen, die vorliegende Offenbarung ist hierauf aber nicht beschränkt. Der Laserbearbeitungskopf 12 kann beispielsweise auch als Schneidkopf ausgebildet sein, und das Laserbearbeitungssystem 10 kann eingerichtet sein, um einen Laserschneidprozess durchzuführen. Das Laserbearbeitungssystem 10 kann auch kurz als Anlage bezeichnet werden.

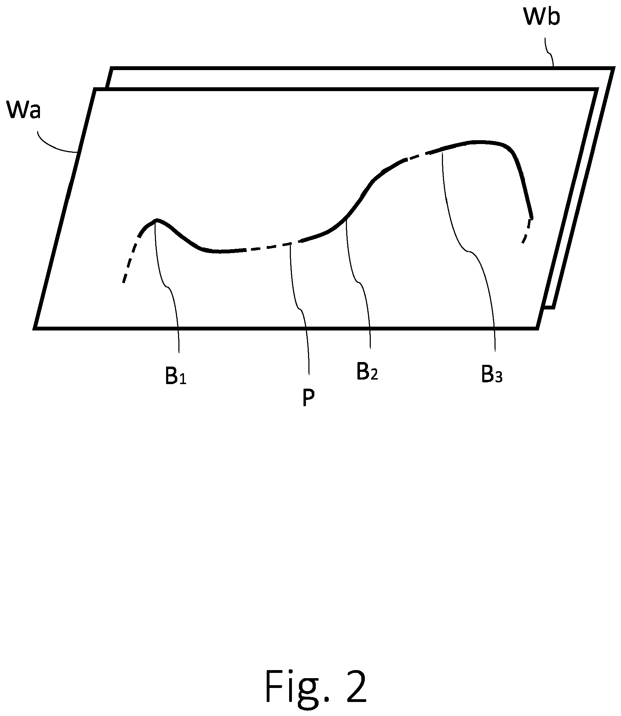

Der Laserschweißkopf 12, ist eingerichtet, um einen von einer Laserstrahlquelle oder einem Ende einer Laserleitfaser austretenden Laserstrahl (nicht gezeigt), auch als Bearbeitungslaserstrahl oder kurz Bearbeitungsstrahl bezeichnet, mit Hilfe einer Strahlführungs- und Fokussieroptik (nicht gezeigt) zu fokussieren und auf zumindest einen Bearbeitungsbereich B₁, B₂, B₃ von zumindest einem zu bearbeitenden Werkstück Wa, Wb einzustrahlen, um dadurch den Laserschweißprozess auszuführen. Die Werkstücke Wa, Wb sind in Fig. 2 in einer schematischen Draufsicht gezeigt.

Der Laserschweißkopf 12 kann als sogenannter Festoptik-Laserschweißkopf oder als sogenannter Scanner-Laserschweißkopf ausgebildet sein. Der Scanner-Laserschweißkopf kann eine Ablenkeinheit zum Ablenken des Laserstrahls relativ zu den Werkstücken Wa, Wb und zum Einstrahlen des Laserstrahls entlang eines Bearbeitungspfads P relativ zu den Werkstücken Wa, Wb aufweisen. Die Ablenkeinheit kann eine Scanner-Optik, ein Scanner-System, einen Scanner-Spiegel und/oder einen Galvano-Scanner aufweisen. Bei dem Festoptik-Laserschweißkopf kann der Laserstrahl durch Bewegung des Laserschweißkopfs 12 selbst relativ zum Werkstück Wa, Wb bewegt werden, oder das Werkstück Wa, Wb wird relativ zum Laserschweißkopf 12 bewegt.

Beim Einstrahlen des Bearbeitungsstrahls auf zumindest eines der Werkstücke Wa, Wb zum Durchführen des Laserschweißprozesses entstehen Prozessemissionen 22, die von den Werkstücken Wa, Wb abgestrahlt wird. Die Prozessemissionen umfassen Strahlung im sichtbaren Wellenlängenbereich, insbesondere eine von den Werkstücken Wa, Wb emittierte Plasmastrahlung, Strahlung im infraroten Wellenlängenbereich, insbesondere eine von den Werkstücken Wa, Wb emittierte Infrarot- oder Temperaturstrahlung, und von den Werkstücken Wa, Wb reflektierte Laserstrahlung des eingestrahlten Laserstrahls. Gemäß Ausführungsformen können die Prozessemissionen auch akustische Prozessemissionen umfassen, beispielsweise von den Werkstücken Wa, Wb emittierte Schallwellen und/oder Druckwellen.

Der zumindest eine Sensor der Sensoreinheit 14 ist eingerichtet, um eine Intensität der Prozessemissionen zu erfassen oder zu messen und basierend darauf ein Sensorsignal zu erzeugen und auszugeben. Mit Bezug auf das Verfahren zum Überwachen des Laserbearbeitungsprozesses gemäß Ausführungsformen der vorliegenden Offenbarung kann das erzeugte Sensorsignal auch als Überwachungssensorsignal bezeichnet werden. Das erzeugte Sensorsignal ist gemäß Ausführungsformen ein eindimensionales, zeitlich veränderliches Signal. Der zumindest eine Sensor kann eine Photodiode oder ein Photodioden- oder Pixelarray umfassen. Gemäß Ausführungsformen umfasst die Sensoreinheit 14 einen ersten Sensor zum Messen einer Intensität der Plasmastrahlung, einen zweiten Sensor zum Messen einer Intensität der reflektierten Laserstrahlung und einen dritten Sensor zum Messen einer Intensität der Temperaturstrahlung, wobei die drei Sensoren jeweils Photodioden umfassen und entsprechende erste bis dritte Sensorsignale erzeugen und ausgeben. Allgemein gesagt kann die Sensoreinheit N Sensoren aufweisen, wobei N eine natürliche Zahl größer 1 ist.

Die Steuereinheit 16 ist mit der Sensoreinheit 14 verbunden und empfängt das Sensorsignal des zumindest einen Sensors. Die Steuereinheit 16 kann eingerichtet sein, um das Sensorsignal aufzuzeichnen. Die Steuereinheit 16 ist eingerichtet, basierend auf dem Sensorsignal des zumindest einen Sensors den Laserschweißprozess zu überwachen. Die Steuereinheit 16 ist ferner dazu eingerichtet, das Laserbearbeitungssystem 10, insbesondere die Sensoreinheit 14, den zumindest einen Sensor und/oder den Laserschweißkopf 12, zu steuern, um ein Verfahren zur Normierung von Sensorsignalen gemäß Ausführungsformen der vorliegenden Offenbarung durchzuführen.

Bei der in Fig. 1A gezeigten Ausführungsform treten die Prozessemissionen 22 in den Laserschweißkopf 12 ein und wird dort von einem Strahlteiler 24 aus dem Strahlengang des Bearbeitungslaserstrahls bzw. aus dem Laserschweißkopf 12 ausgekoppelt. Die Prozessemissionen werden anschließend in die Sensoreinheit 14 geleitet und trifft dort auf zumindest einen Sensor (nicht gezeigt). Ein Strahlverlauf der Prozessemissionen 22 zwischen den Werkstücken Wa, Wb und dem Sensor verläuft zumindest streckenweise innerhalb des Laserbearbeitungskopfes 12 und/oder koaxial mit dem Strahlengang des Bearbeitungslaserstrahls. In Fig. 1A werden die in den Laserschweißkopf 12 eingetretene Prozessemissionen 22 an einem Strahlteiler 24 zum Sensor bzw. zur Sensoreinheit 14 abgelenkt. Alternativ kann selbstverständlich der Bearbeitungslaserstrahl am Strahlteiler 24 abgelenkt werden und der Strahlverlauf der Prozessemissionen 22 kann zwischen den Werkstücken Wa, Wb und dem Sensor gerade sein.

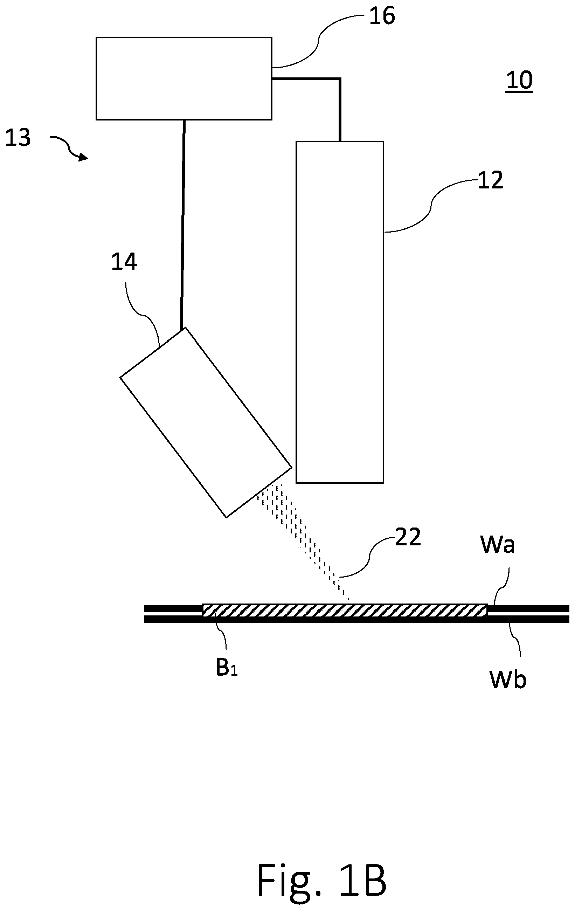

Fig. 1B zeigt eine schematische Darstellung eines Laserbearbeitungssystems zum Durchführen eines Laserbearbeitungsprozesses und zum Überwachen des Laserbearbeitungsprozesses gemäß weiterer Ausführungsformen. Das in Fig. 1B gezeigte Laserbearbeitungssystem 10 ist dem in Fig. 1A gezeigten Laserbearbeitungssystem 10 ähnlich, weshalb im Folgenden lediglich die Unterschiede beschrieben werden. Wie in Fig. 1B gezeigt ist die Sensoreinheit 14 bzw. der Sensor so angeordnet, dass ein Strahlverlauf der Prozessemissionen 22 zwischen dem zumindest einen Werkstück Wa, Wb und dem Sensor vollständig außerhalb des Laserbearbeitungskopfes 12 liegt. In diesem Fall ist der in Fig. 1A gezeigte Strahlteiler 24, sowie eine Schnittstelle zwischen der Sensoreinheit 14 und dem Laserschweißkopf 12 nicht erforderlich.

Der Laserschweißprozess umfasst das Einstrahlen des Laserstrahls auf eines oder beide der zu verschweißenden Werkstücke Wa, Wb. Durch das Einstrahlen des Laserstrahls erfolgt ein Energieeintrag in das zumindest eine Werkstück Wa, Wb, wodurch Material der Werkstücke Wa, Wb aufgeschmolzen wird oder verdampft. Dadurch entsteht Temperatur- und Plasmastrahlung. Ein Teil des Laserstrahls wird vom Werkstück Wa, Wb reflektiert. Beim Abkühlen des Materials wird eine Schweißnaht ausgebildet. Die Schweißnaht kann an einem der Werkstücke Wa, Wb ausgebildet sein, oder kann an beiden der Werkstücke Wa, Wb ausgebildet sein. Durch die ausgebildete Schweißnaht werden die Werkstücke Wa, Wb miteinander verbunden.

Ein Bereich der Werkstücke Wa, Wb, auf den der Laserstrahl eingestrahlt wird, um eine Schweißnaht auszubilden, kann als Bearbeitungsbereich bezeichnet werden. Der Bearbeitungsbereich kann beispielsweise linienförmig oder flächig ausgebildet sein. Ein Bearbeitungsbereich kann einer oder mehreren Schweißnähten entsprechen. Bearbeitungsbereiche und/oder Schweißnähte können zusammenhängend oder voneinander getrennt an den Werkstücken Wa, Wb angeordnet sein. Das Einstrahlen des Laserstrahls auf einen oder mehrere Bearbeitungsbereiche zum Durchführen des Laserschweißprozess kann entlang eines vorgegebenen Bearbeitungspfads P, wie in Fig. 2 gezeigt, erfolgen. Demnach können Pfadabschnitte des Bearbeitungspfads P den Bearbeitungsbereichen entsprechen. Die Geschwindigkeit, mit der der Laserstrahl entlang des Bearbeitungspfads P eingestrahlt wird, kann als Vorschubgeschwindigkeit bezeichnet werden.

Wie in Fig. 2 gezeigt umfasst ein Laserbearbeitungsprozess beispielsweise das Bearbeiten von drei Bearbeitungsbereichen B₁, B₂, B₃, um drei Schweißnähte auszubilden. Beim Bearbeiten eines der Bearbeitungsbereiche B₁, B₂, B₃ durch Einstrahlen des Laserstrahls kann das zuvor beschriebene Sensorsignal des zumindest einen Sensors für diesen Bearbeitungsbereich B₁, B₂, B₃ erzeugt werden. Wenn die Sensoreinheit 14 beispielsweise drei Sensoren aufweist, können also für jeden der drei Bearbeitungsbereiche B₁, B₂, B₃ drei Sensorsignale aufgezeichnet werden. Allgemein gesagt kann ein Laserschweißprozess das Bearbeiten von M Bearbeitungsbereiche aufweisen, wobei M eine natürliche Zahl größer 1 ist.

Ein vorgegebener Laserschweißprozess definiert einen oder mehrere Prozessparamater, um die Schweißnähte auf eine vorgegebene Weise auszubilden. Die Prozessparameter können die zu bearbeitenden Bearbeitungsbereiche, einen vorgegebenen Bearbeitungspfad, eine Fokuslage, eine Laserleistung, eine Vorschubgeschwindigkeit, einen Laserstrahldurchmesser und/oder einen Abstand und/oder Orientierung eines Laserschweißkopfes zu einem Werkstück. Prozessparameter wie die Fokuslage, die Vorschubgeschwindigkeit, die Laserleistung und/oder der Laserstrahldurchmesser können während der Bearbeitung eines Bearbeitungsbereichs veränderlich oder konstant sein.

Die Überwachung des vorgegebenen Laserschweißprozesses erfolgt anhand von vorgegebenen Überwachungsparametern. Beispielsweise werden Sensorsignale mit vorgegebenen Hüllkurven und/oder Schwellwerten verglichen und es kann ein Fehler ausgegeben werden, wenn die Sensorsignale außerhalb der Hüllkurven liegen oder einen Schwellwert über- oder unterschreiten.

Die Erfinder haben herausgefunden, dass beim Durchführen eines vorgegebenen Laserschweißprozesses durch identische Laserbearbeitungssysteme dennoch Unterschiede in den erzeugten Sensorsignalen auftreten. Mit anderen Worten variieren die Prozessemissionen, die dieser Laserbearbeitungsprozess hervorruft, zwischen identischen Laserbearbeitungssystemen. Identische Laserbearbeitungssysteme können beispielsweise mehrere Exemplare desselben kommerziell erhältlichen Typs oder Modells eines Laserbearbeitungssystems bezeichnen. Durch die Variation der Prozessemissionen variieren auch darauf basierend erzeugten Sensorsignale. Insbesondere können mittlere Signalniveaus oder mittlere Signalwerte der Sensorsignale variieren.

Der Grund hierfür liegt unter anderem an Toleranzen des Laserbearbeitungssystems, insbesondere Herstellungs- und Materialtoleranzen. Beispielsweise können die Laserstrahlquelle, optische Elemente des Laserbearbeitungskopfes wie Fokussieroptiken, Kollimatoroptiken, Linsen, Spiegel, Ablenkeinheiten etc. Toleranzen aufweisen. Auch Toleranzen der Sensoreinheit oder der Sensoren können zu Unterschieden der erfassten Prozessemissionen und der erzeugten Sensorsignale führen. Die Sensorsignale können sich also von Laserbearbeitungssystem zu Laserbearbeitungssystem unterscheiden.

Mittels des hierin beschriebenen Verfahrens zur Normierung der Sensorsignale für die Überwachung eines vorgegebenen Laserbearbeitungsprozesses an identischen Laserbearbeitungssystemen können die Variationen der Sensorsignale verringert oder eliminiert werden. Somit werden die Sensorsignale identischer Laserbearbeitungssysteme untereinander vergleichbar. Folglich ist eine Prozessüberwachung mit identischen Überwachungsparametern für mehrere identische Laserbearbeitungssysteme möglich.

Damit müssen Überwachungsparameter für einen vorgegebenen Laserbearbeitungsprozess nicht mehr für jedes einzelne von mehreren identischen Laserbearbeitungssystemen individuell bestimmt werden. Somit können beispielsweise Überwachungsparameter für alle an Kunden verkaufte identische Laserbearbeitungssysteme von einem Referenz-Laserbearbeitungssystem übernommen werden. Das Referenz-Laserbearbeitungssystem kann beispielsweise beim Hersteller der Laserbearbeitungssysteme verbleiben. Damit kann die Herstellung, die Inbetriebnahme und die Wartung der Laserbearbeitungssysteme deutlich vereinfacht und verkürzt werden.

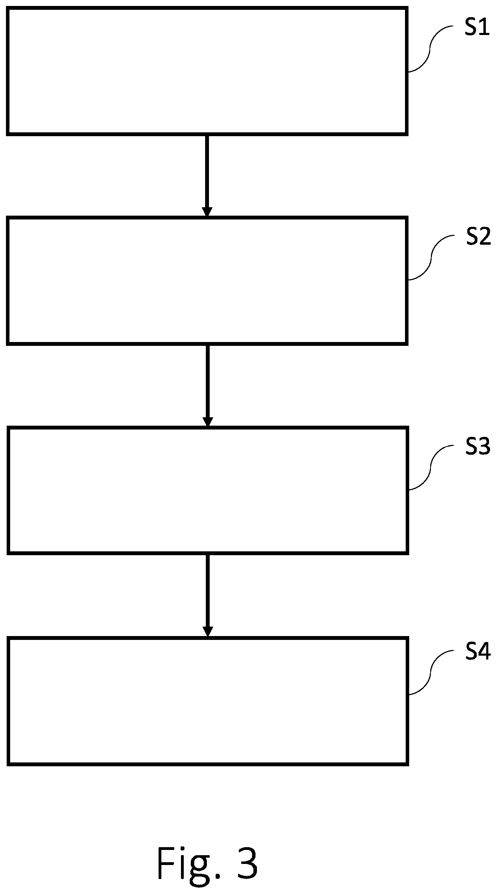

Fig. 3 zeigt ein Flussdiagramm eines Verfahrens zur Normierung von Sensorsignalen für die Überwachung eines Laserbearbeitungsprozesses gemäß Ausführungsformen. Das Verfahren kann auch als Autoskalierung oder Autoskalierverfahren bezeichnet werden.

Nachfolgend wird davon ausgegangen, dass ein Bearbeitungsbereich einer auszubildenden Schweißnaht entspricht. Die Offenbarung ist hierauf aber nicht beschränkt. Ein Bearbeitungsbereich kann auch mehreren auszubildenden Schweißnähten entsprechen. Die Bearbeitungsbereiche und/oder die Schweißnähte können an einem Werkstück zusammenhängend oder getrennt voneinander angeordnet sein. Das Verfahren zur Normierung von Sensorsignalen und/oder das nachfolgend beschriebene Verfahren zum Überwachen des Laserbearbeitungsprozesses kann individuell pro Schweißnaht oder über alle Schweißnähe erfolgen.

Das Verfahren wird beispielhaft anhand des mit Bezug auf Fig. 1A und 1B beschriebenen Laserbearbeitungssystems 10 beschrieben. Das Verfahren beginnt (S1) mit dem Durchführen eines vorgegebenen Laserbearbeitungsprozesses, wobei der Laserbearbeitungsprozess das Bearbeiten zumindest eines Bearbeitungsbereichs umfasst. Beispielsweise kann der vorgegebene Laserbearbeitungsprozess ein Laserschweißprozess sein und das Bearbeiten der drei Bearbeitungsbereiche B₁, B₂, B₃ von Fig. 2 zum Ausbilden von drei Schweißnähten umfassen.

Während der Bearbeitung des zumindest einen Bearbeitungsbereichs werden die erzeugten Prozessemissionen mittels zumindest eines Sensors der Sensoreinheit erfasst und es wird ein entsprechendes Sensorsignal erzeugt (S2). Wenn die Sensoreinheit 14 beispielsweise drei Sensoren umfasst, werden für die Bearbeitung von jedem der drei Bearbeitungsbereiche B₁, B₂, B₃ drei Sensorsignale erzeugt. Somit werden für jeden der drei Bearbeitungsbereiche B₁, B₂, B₃ ein entsprechendes erstes Sensorsignal, ein zweites Sensorsignal und ein drittes Sensorsignal erzeugt.

Die Definition, wie viele einzelne Bearbeitungsbereiche oder Schweißnähte das zumindest eine Werkstück umfasst, kann dem Laserbearbeitungssystem durch einen Bediener manuell mitgeteilt werden. Zusätzlich dazu oder alternativ kann das Laserbearbeitungssystem die einzelnen Bearbeitungsbereiche oder Schweißnähe automatisch erkennen. Die Definition der Bearbeitungsbereiche, beispielsweise ein Startzeitpunkt, ein Stoppzeitpunkt und/oder die Anzahl der Bearbeitungsbereiche, kann vom Bediener manuell mitgeteilt werden, oder kann vom Laserbearbeitungssystem automatisch erkannt werden.

Anschließend (S3) werden Mittelwerte für die drei Sensorsignale bestimmt. Gemäß Ausführungsformen kann für jeden der Bearbeitungsbereiche und für jedes der erzeugten Sensorsignale ein entsprechender Mittelwert bestimmt werden. Insgesamt können also N x M Mittelwerte bestimmt werden. Unter Bezugnahme auf das vorherige Beispiel wird ein Mittelwert M_{1,1} des ersten Sensorsignals für den ersten Bearbeitungsbereich B₁, ein Mittelwert M_{1,2} des ersten Sensorsignals für den zweiten Bearbeitungsbereich B₂, und ein Mittelwert M_{1,3} des ersten Sensorsignals für den dritten Bearbeitungsbereich B₃ bestimmt. Ferner werden drei Mittelwerte M_{2,1}, M_{2,2}, M_{2,3} des zweiten Sensorsignals und für den ersten bis dritten Bearbeitungsbereich B₁, B₂, B₃ und drei Mittelwerte M_{3,1}, M_{3,2}, M_{3,3} des dritten Sensorsignals für den ersten bis dritten Bearbeitungsbereich B₁, B₂, B₃ bestimmt. Insgesamt werden in diesem Beispiel also neun Mittelwerte bestimmt.

Gemäß Ausführungsformen sind die gebildeten Mittelwerte arithmetische Mittelwerte der in den Sensorsignalen für die jeweiligen Bearbeitungsbereiche enthaltenen Sensorwerte, die vorliegende Offenbarung ist hierauf aber nicht beschränkt. Mit anderen Worten wird eine arithmetische Mittelwertberechnung pro Sensor und Bearbeitungsbereich (z.B. Schweißnaht) durchgeführt.

Bevor die Mittelwerte bestimmt werden, kann das Verfahren einen Schritt zum Bereinigen der Sensorsignale umfassen. Das Bereinigen wird für jedes Sensorsignal für jeden Bearbeitungsbereich getrennt durchgeführt. Dabei werden Ausreißer der Sensorwerte erkannt und entfernt. Ausreißer sind beispielsweise besonders große oder besonders kleine Sensorwerte. Der Schritt kann ein Sortieren der Sensorwerte umfassen.

Dazu werden die kleinsten Sensorwerte und/oder die größten Sensorwerte basierend auf vorgegebenen und/oder einstellbaren Prozentwerten entfernt. Beispielsweise können x Prozent der kleinsten Sensorwerte eines Sensorsignals für einen Bearbeitungsbereich und/oder y Prozent der größten Sensorwerte eines Sensorsignals für einen Bearbeitungsbereich entfernt werden, wobei x und y eine rationale Zahl zwischen 0 und 100 sind. Das Bestimmen des Mittelwerts des Sensorsignals für den Bearbeitungsbereich erfolgt anschließend wie zuvor beschrieben basierend auf den verbleibenden Signalwerten des Sensorsignals, d.h. basierend auf dem bereinigten Sensorsignal, für diesen Bearbeitungsbereich.

Beispielsweise werden die Sensorwerte des ersten Sensorsignals von Ausreißern bereinigt, der während der Bearbeitung des ersten Bearbeitungsbereichs B₁ basierend auf den erfassten Prozessemissionen vom ersten Sensor erzeugt wurde. Anschließend werden für die Bestimmung des Mittelwert M_{1,1} des ersten Sensorsignals für den ersten Bearbeitungsbereich B₁ die verbleibenden Sensorwerte des ersten Sensorsignals verwendet.

Das Entfernen oder Verwerfen von Ausreißern hat den Vorteil, dass der Schritt zum Bestimmen der Mittelwerte und damit das Bestimmen der Skalierungsfaktoren und das Normieren der Sensorwerte stabil und frei von Störungen erfolgen kann. Demnach haben Ausreißer keinen oder keinen großen Einfluss auf die bestimmten Skalierungsfaktoren.

Als Nächstes (S4) werden Skalierungsfaktoren für die Sensorsignale und für die Bearbeitungsbereiche basierend auf den bestimmen Mittelwerten bestimmt. Das Bestimmen der Skalierungsfaktoren kann ein Normalisieren der bestimmten Mittelwerte umfassen. Gemäß Ausführungsformen kann das Bestimmen der Skalierungsfaktoren das Dividieren der Mittelwerte durch entsprechende Referenzwerte umfassen.

Gemäß Ausführungsformen können die Referenzwerte Mittelwerte sein, die mittels der Schritte S1-S3 für ein zuvor beschriebenes Referenz-Laserbearbeitungssystem bestimmt wurden, das identisch bzw. baugleich ist zu dem betrachteten Laserbearbeitungssystem. Demnach können die Mittelwerte des betrachteten Laserbearbeitungssystems im Schritt S4 auf die Mittelwerte des identischen Referenz-Laserbearbeitungssystems bezogen werden.

Unter Bezugnahme auf das zuvor beschriebene Beispiel wird ein Skalierungsfaktor F_{1,1} für das erste Sensorsignal und für den ersten Bearbeitungsbereich B₁ durch Dividieren des Mittelwerts M_{1,1} durch einen vorgegebenen Referenzwert R_{1,1} bestimmt. Insgesamt werden in diesem Beispiel neun Skalierungsfaktoren F_{1,1} bis F_{3,3} basierend auf neun Referenzwerten R_{1,1} bis R_{3,3} bestimmt.

Durch das Verfahren zur Normierung von Sensorsignalen werden also individuelle Skalierungsfaktoren pro Bearbeitungsbereich und pro Sensorsignal bzw. Sensor bestimmt oder berechnet. Dadurch können die Sensorsignale auf ein einheitliches Signalniveau für identische Laserbearbeitungssysteme und auf einen definierten Sollwert gebracht werden.

Die mittels des vorstehend beschriebenen Verfahrens zur Normierung von Sensorwerten bestimmten Skalierungsfaktoren können für die Überwachung von nachfolgenden, identischen Laserbearbeitungsprozessen gespeichert werden. Die Speicherung kann beispielsweise durch die Steuereinheit 16 erfolgen.

Das vorstehende Verfahren kann bei der Inbetriebnahme des Laserbearbeitungssystems und nach dem Austausch von Komponenten des Laserbearbeitungssystems 10, beispielsweise des Laserbearbeitungskopfes 12, des Prozessüberwachungssystems 12, oder den zuvor beschriebenen Komponenten davon durchgeführt werden.

Das vorstehend beschriebene Verfahren zur Normierung der Sensorsignale kann beispielsweise durch die Steuereinheit 16 des Überwachungssystems 13 des mit Bezug auf Fig. 1A und 1B beschriebenen Laserbearbeitungssystems durchgeführt werden, und kann insbesondere durch eine Software der Steuereinheit 16 durchgeführt werden.

Gemäß weiterer Ausführungsformen kann ein Bediener des Verfahrens oder des Laserbearbeitungssystems auswählen, ob der Laserbearbeitungsprozess zur Normierung der Sensorwerte mehrfach durchgeführt werden soll. Demnach können die Schritte S1, S2 und S3 mehrfach oder wiederholt durchgeführt werden. Insgesamt können die Schritte S1-S3 Z Mal durchgeführt werden, wobei Z eine natürliche Zahl größer 1 ist. Z kann beispielsweise zwischen 2 und 100, insbesondere zwischen 5 und 50, liegen, wobei die Ränder mit eingeschlossen sind, und kann beispielsweise 10 betragen.

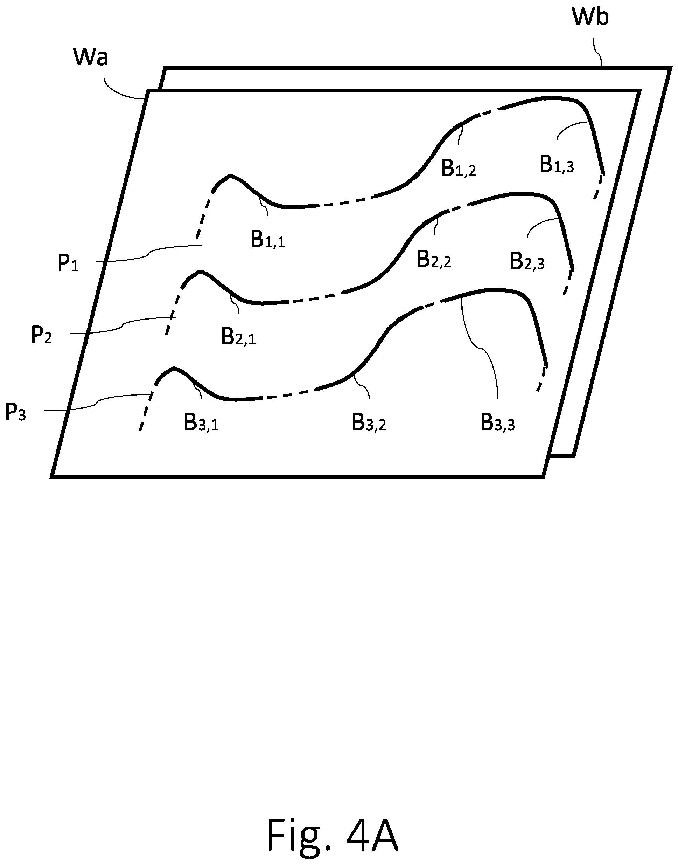

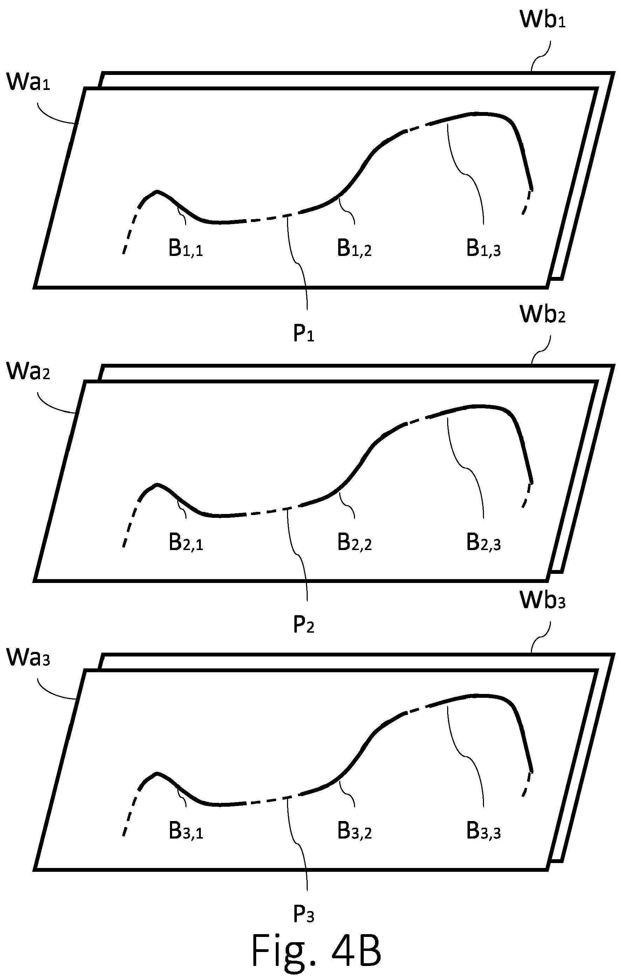

Der Schritt S1 zum Durchführen des Laserbearbeitungsprozesses umfassend das Bearbeiten von zumindest einem Bearbeitungsbereich wird also mehrfach durchgeführt. Der Laserbearbeitungsprozess kann, wie Fig. 4A gezeigt, mehrfach an demselben zumindest einem Werkstück Wa, Wb durchgeführt werden. Alternativ oder zusätzlich kann der Laserbearbeitungsprozess, wie in Fig. 4B gezeigt, mehrfach an verschiedenen Werkstücken oder Werkstückgruppen Wa₁/Wb₁, Wa₂/Wb₂, Wa₃/Wb₃ durchgeführt werden. Wie in Fig. 4A und 4B gezeigt, wurde der identische Laserbearbeitungsprozess jeweils dreimal entlang von drei identischen Bearbeitungspfaden P₁, P₂, P₃ durchgeführt. Jeder Bearbeitungspfad P₁, P₂, P₃ umfasst drei Bearbeitungsbereiche. Der erste Bearbeitungspfad P₁ umfasst die Bearbeitungsbereiche B_{1,1}, B_{1,2}, B_{1,3}, der zweite Bearbeitungspfad P₂ umfasst die Bearbeitungsbereiche B_{2,1}, B_{2,2}, B_{2,3}, und der dritte Bearbeitungspfad P₃ umfasst die Bearbeitungsbereiche B_{3,1}, B_{3,2}, B_{3,3}. Demnach wurden die ersten Bearbeitungsbereiche B_{1,1}, B_{2,1}, B_{3,1} mit identischen Prozessparametern bearbeitet. Gleiches gilt für die zweiten Bearbeitungsbereiche B_{1,2}, B_{2,2}, B_{3,2} und für die dritten Bearbeitungsbereiche B_{1,3}, B_{2,3}, B_{3,3}.

Ebenso werden die Schritte S2 und S3 Z mal ausgeführt. Demnach wird beispielsweise mittels eines ersten Sensors ein erstes Sensorsignal für den Bearbeitungsbereich B_{1,1}, ein erstes Sensorsignal für den Bearbeitungsbereich B_{2,1} und ein erstes Sensorsignal für den Bearbeitungsbereich B_{3,1} erzeugt, und es werden ein Mittelwert M_{1,1,1} für das erste Sensorsignal für den Bearbeitungsbereich B_{1,1}, ein Mittelwert M_{1,1,2} für das erste Sensorsignal für den Bearbeitungsbereich B_{2,1} und ein Mittelwert M_{1,1,3} für das erste Sensorsignal für den Bearbeitungsbereich B_{3,1} bestimmt.

Entsprechendes gilt für das erste Sensorsignal für die Bearbeitungsbereiche B_{2,1}, B_{2,2}, B_{2,3} und die Bearbeitungsbereiche B_{3,1}, B_{3,2}, B_{3,3}. Ferner gilt entsprechendes für das zweite Sensorsignal und für das dritte Sensorsignal für die Bearbeitungsbereiche B_{1,1} bis B_{3,3}. Insgesamt werden also N x M x Z, im vorliegenden Beispiel 27, Mittelwerte bestimmt.

Basierend auf den Mittelwerten M_{1,1,1}, M_{1,1,2}, M_{1,1,3} wird anschließend ein übergeordneter Mittelwert M'_{1,1} für das erste Sensorsignal für die identischen ersten Bearbeitungsbereiche B_{1,1}, B_{2,1}, B_{3,1} bestimmt. Gemäß Ausführungsformen kann der übergeordnete Mittelwert M`_{1,1} als arithmetischer Mittelwert der Mittelwerte M_{1,1,1}, M_{1,1,2}, M_{1,1,3} bestimmt werden. Entsprechend kann ein übergeordneter Mittelwert M'_{1,2} für das erste Sensorsignal für die identischen zweiten Bearbeitungsbereiche B_{1,2}, B_{2,2}, B_{3,2} und ein übergeordneter Mittelwert M'_{1,3} für das erste Sensorsignal für die identischen Bearbeitungsbereiche B_{1,3}, B_{2,3}, B_{3,3} erhalten werden. Demnach werden neun übergeordnete Mittelwerte M'_{1,1} bis M'_{3,3} erhalten.

Schließlich werden die Skalierungsfaktoren wie im Schritt S4 des Verfahrens gemäß Fig. 3 bestimmt. Im vorliegenden Beispiel werden die neun Skalierungsfaktoren F_{1,1} bis F_{3,3} basierend auf den übergeordneten Mittelwerten M'_{1,1} bis M'_{3,3} bestimmt.

Es kann vorkommen, dass der Laserschweißprozess nicht fehlerfrei abläuft. Beispielsweise können die ausgebildeten Schweißnähte Fehler aufweisen. Deshalb ist es von Vorteil, wenn wie vorstehend beschrieben der Laserbearbeitungsprozess mehrfach durchgeführt wird und die Skalierungsfaktoren basierend auf den übergeordneten Mittelwerten bestimmt werden. So kann sichergestellt werden, dass fehlerhaft durchgeführte Laserschweißprozesse und die dabei aufgezeichneten Sensorsignale keinen zu großen Einfluss auf die ermittelten Skalierungsfaktoren haben. Das Risiko kann weiter minimiert werden, indem der Bediener nach Schritt S1 auswählt, welche der bearbeiteten Bearbeitungsbereiche bzw. welche Werkstücke für die Bestimmung der Skalierungsfaktoren verwendet werden sollen. Bei der Auswahl sollte der Bediener sicherstellen, dass die Bearbeitungsbereiche bzw. Werkstücke fehlerfrei bearbeitet wurden.

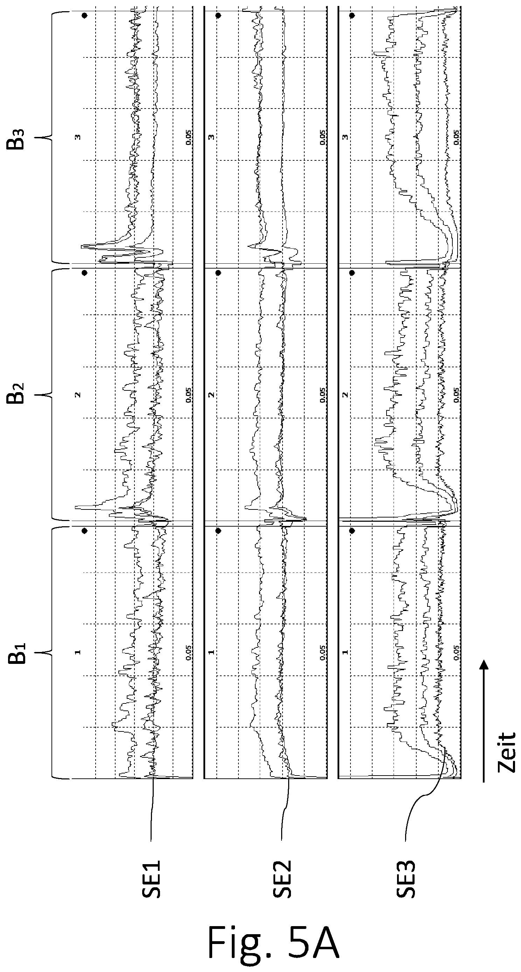

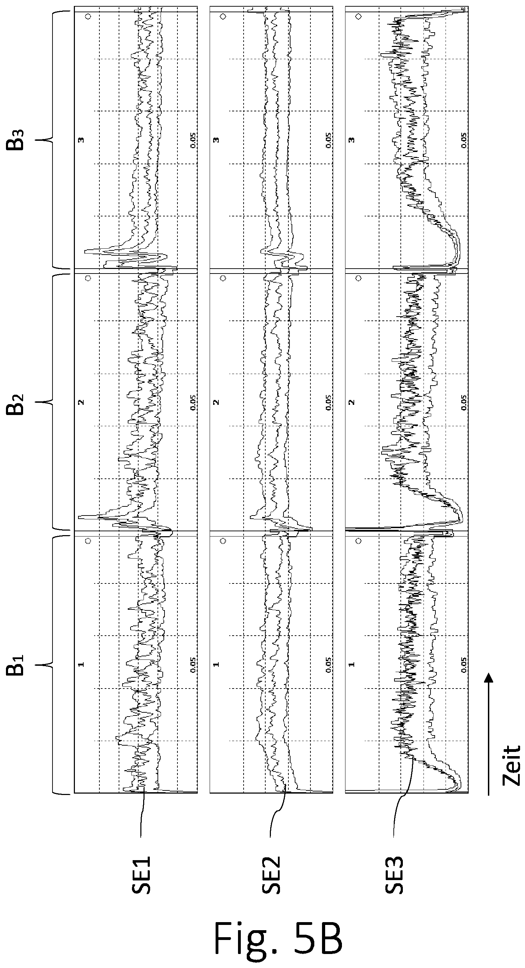

Mithilfe der durch das Verfahren zur Normierung von Sensorsignalen bestimmten Skalierungsfaktoren können Überwachungsparameter für die Überwachung eines Laserbearbeitungssystems auch zur Überwachung eines anderen, identischen Laserbearbeitungssystems verwendet werden. Dies wird mit Bezug auf Fig. 5A und 5B veranschaulicht.

Fig. 5A und 5B zeigen Diagramme mit zeitlichen Verläufen SE1, SE2, SE3 von drei Überwachungssensorsignalen. Die drei Überwachungssensorsignale wurden durch ein Verfahren zum Überwachen eines Laserbearbeitungsprozesses erhalten, welches durch ein Exemplar B des mit Bezug auf Fig. 1A und 1B beschriebenen Laserbearbeitungssystems 10 durchgeführt wurde.

Der Laserbearbeitungsprozess ist ein Laserschweißprozess umfassend das Bearbeiten von drei Bearbeitungsbereichen B₁, B₂, B₃, die jeweils einer Schweißnaht entsprechen. Während des Laserbearbeitungsprozesses wurden die drei Überwachungssensorsignale basierend auf Prozessemissionen erzeugt, die durch drei entsprechende Sensoren mit einer spektralen Empfindlichkeit in unterschiedlichen Wellenlängenbereichen erfasst wurde.

In Fig. 5A und 5B sind in den Verläufen SE1, SE2, SE3 die drei Überwachungssensorsignale für jeden der drei Bearbeitungsbereiche B1, B2, B3 gekennzeichnet. Jedes der der drei Überwachungssensorsignale wurde also für jeden der drei Bearbeitungsbereiche B₁, B₂, B₃ erzeugt und aufgezeichnet. Eine Prozessüberwachung kann gemäß Ausführungsformen nur innerhalb der gekennzeichneten Überwachungssensorsignale stattfinden.

In Fig. 5A ist der Fall dargestellt, in dem das Verfahren zur Normierung der Sensorsignale für das Laserbearbeitungssystem B noch nicht durchgeführt wurde. In den Diagrammen wurden ferner die für die Überwachung verwendeten Hüllkurven eines Exemplars A des Laserbearbeitungssystems eingezeichnet. Die Hüllkurven beschreiben ein zulässiges Toleranzband, das auf für das Laserbearbeitungssystem A und für den identischen Laserschweißprozess nach der Autoskalierung des Laserbearbeitungssystems A ermittelt wurde.

Wird, wie beschrieben, der identische Laserschweißprozess durch das Laserbearbeitungssystem B durchgeführt und wird durch einen Bediener des Laserschweißsystems, auch als Anlagenbediener bezeichnet, sichergestellt, dass der Laserschweißsystems stabil und fehlerfrei abläuft, so zeigen die Verläufe SE1, SE2, SE3 der Überwachungssensorsignale dennoch vermeintliche Unterschiede in den erfassten Prozessemissionen. Der Grund liegt in den beschriebenen Toleranzen des Laserbearbeitungssystems B gegenüber A, beispielsweise Toleranzen der verbauten Optik, des verwendeten Lasers oder des verwendeten Scanners. Diese Unterschiede führen dazu, dass der mit dem Laserbearbeitungssystem B identisch durchgeführte Laserschweißprozess nicht mit den Überwachungsparametern, beispielsweise den Hüllkurven, des Laserbearbeitungssystems A überwacht werden kann.

In Fig. 5B ist der Fall dargestellt, in dem das Verfahren zur Normierung der Sensorsignalwerte gemäß Ausführungsformen der vorliegenden Offenbarung für das Laserbearbeitungssystem B durchgeführt wurde. Dazu wurden die drei Überwachungssensorsignale mittels für das Laserbearbeitungssystem B und für den vorgegebenen Laserschweißprozess bestimmter Skalierungsfaktoren skaliert.

Die in dem Normierverfahren für das Laserbearbeitungssystem B ermittelten Skalierungsfaktoren (individuell pro Bearbeitungsbereich und pro Sensor) sorgen dafür, dass die Sensorsignale des Laserbearbeitungssystems B wieder innerhalb der Hüllkurven des Laserbearbeitungssystems A verlaufen. Durch die skalierten Sensorsignale können die Überwachungsparameter des Laserbearbeitungssystems A also für die Überwachung des Laserbearbeitungssystems B verwendet werden.

## Patentansprüche

1. Verfahren zur Normierung von Sensorsignalen für die Überwachung eines Laserbearbeitungsprozesses, umfassend die Schritte:
- Durchführen (S1) eines vorgegebenen Laserbearbeitungsprozesses mittels eines Laserbearbeitungssystems (10) zum Bearbeiten von zumindest einem Werkstück (Wa, Wb), wobei der Laserbearbeitungsprozess das Bearbeiten zumindest eines Bearbeitungsbereichs (B₁, B₂, B₃) umfasst;
- Erzeugen (S2) eines ersten Sensorsignals basierend auf für den Bearbeitungsbereich (B₁, B₂, B₃), durch einen ersten Sensor erfassten Prozessemissionen (22), insbesondere optische Prozessemissionen,
- Bestimmen (S3) eines ersten Mittelwerts des ersten Sensorsignals,
- Bestimmen (S4) eines ersten Skalierungsfaktors für das erste Sensorsignal für den Bearbeitungsbereich (B₁, B₂, B₃) basierend auf dem ersten Mittelwert.

2. Verfahren nach Anspruch 1, wobei das Bestimmen des ersten Skalierungsfaktors (S4) das Bestimmen eines Quotienten zwischen einem ersten Referenzwert und dem ersten Mittelwert umfasst.

3. Verfahren nach einem der vorstehenden Ansprüche, ferner umfassend:
- Wiederholen des Schritts Durchführen des vorgegebenen Laserbearbeitungsprozesses (S1),
- Erzeugen eines entsprechenden ersten Sensorsignals (S2) für jede Wiederholung, und Bestimmen eines entsprechenden ersten Mittelwerts für jede Wiederholung,
- Bestimmen eines übergeordneten ersten Mittelwerts basierend auf den entsprechenden ersten Mittelwerten für jede Wiederholung,
wobei das Bestimmen des ersten Skalierungsfaktors basierend auf dem ersten übergeordneten Mittelwert erfolgt.

4. Verfahren nach einem der vorstehenden Ansprüche, umfassend:
- Erzeugen eines zweiten Sensorsignals basierend auf für den Bearbeitungsbereich durch einen zweiten Sensor erfassten Prozessemissionen (22), wobei der erste Sensor und der zweite Sensor verschiedene spektrale Empfindlichkeitsbereiche aufweisen;
- Bestimmen eines zweiten Mittelwerts des zweiten Sensorsignals,
- Bestimmen eines zweiten Skalierungsfaktors für das zweite Sensorsignal für den Bearbeitungsbereich (B₁, B₂, B₃) basierend auf dem zweiten Mittelwert.

5. Verfahren nach einem der vorstehenden Ansprüche, wobei das erste Sensorsignal auf einer in einem vorgegebenen Wellenlängenbereich oder bei einer vorgegebenen Wellenlänge erfassten Intensität der Prozessemissionen (22) basiert.

6. Verfahren nach einem der vorstehenden Ansprüche, wobei das erste Sensorsignal auf einer erfassten Intensität einer Temperaturstrahlung im infraroten Wellenlängenbereich, einer erfassten Intensität einer Plasmastrahlung im sichtbaren Wellenlängenbereich oder einer erfassten Intensität einer reflektierten Laserstrahlung basiert.

7. Verfahren nach einem der vorstehenden Ansprüche, wobei das Bestimmen des Mittelwerts umfasst:
- Entfernen der kleinsten Signalwerte und/oder Entfernen der größten Signalwerte des Sensorsignals, und
- Bestimmen des Mittelwerts basierend auf den verbleibenden Signalwerten des Sensorsignals.

8. Verfahren nach einem der vorstehenden Ansprüche, wobei der Bearbeitungsbereich (B₁, B₂, B₃) einem Pfadabschnitt eines vorgegebenen Bearbeitungspfads (P) des Laserbearbeitungsprozesses auf dem zumindest einen Werkstück (Wa, Wb) entspricht.

9. Verfahren nach einem der vorstehenden Ansprüche, wobei der vorgegebene Laserbearbeitungsprozess einen Laserschweißprozess umfasst, und der zumindest eine Bearbeitungsbereich (B₁, B₂, B₃) einer Schweißnaht entspricht, und/oder wobei der vorgegebene Laserbearbeitungsprozess einen Laserschneidprozess umfasst und der zumindest eine Bearbeitungsbereich (B₁, B₂, B₃) einer Schnittkante entspricht.

10. Verfahren nach einem der vorstehenden Ansprüche, wobei der erste Skalierungsfaktor und/oder zweite Skalierungsfaktor für eine Überwachung von nachfolgenden, identischen Laserbearbeitungsprozessen gespeichert wird.

11. Verfahren nach einem der vorstehenden Ansprüche, wobei das Verfahren bei der Inbetriebnahme des Laserbearbeitungssystems (10) und/oder nach Austausch einer Komponente des Laserbearbeitungssystems (10) durchgeführt wird.

12. Verfahren zum Überwachen eines Laserbearbeitungsprozesses, das Verfahren umfassend:
- Durchführen eines Laserbearbeitungsprozesses mittels eines Laserbearbeitungssystems zum Bearbeiten von zumindest einem Werkstück (Wa, Wb), wobei der Laserbearbeitungsprozess das Bearbeiten zumindest eines Bearbeitungsbereichs (B₁, B₂, B₃) umfasst;
- Erzeugen eines ersten Sensorsignals basierend auf für den Bearbeitungsbereich (B₁, B₂, B₃) durch einen ersten Sensor erfassten Prozessemissionen (22), insbesondere optische Prozessemissionen;
- Skalieren des ersten Sensorsignals mittels eines für dieses Laserbearbeitungssystem (10) und diesen Laserbearbeitungsprozess bestimmten ersten Skalierungsfaktors, und Überwachen des Laserbearbeitungsprozesses anhand des basierend auf dem ersten Skalierungsfaktor skalierten ersten Sensorsignals und anhand von zumindest einem vorgegebenen Überwachungsparameter für das erste Sensorsignal; oder
- Skalieren des zumindest einen vorgegebenen Überwachungsparameters für das erste Sensorsignal mittels des für dieses Laserbearbeitungssystem (10) und diesen Laserbearbeitungsprozess bestimmten ersten Skalierungsfaktors, und Überwachen des Laserbearbeitungsprozesses anhand des ersten Sensorsignals und anhand des zumindest einen basierend auf dem ersten Skalierungsfaktor skalierten Überwachungsparameters.

13. Verfahren nach Anspruch 12, wobei der zumindest eine Überwachungsparameter für das erste Sensorsignal ausgewählt ist aus der Gruppe, die umfasst: eine obere Hüllkurve, eine untere Hüllkurve, einen oberen Schwellwert, einen unteren Schwellwert, einen Referenzverlauf, einen Mittelwert.

14. Laserbearbeitungssystem (10), umfassend:
- einen Laserbearbeitungskopf (12), eingerichtet zum Einstrahlen eines Laserstrahls auf ein Werkstück (Wa, Wb) zum Durchführen eines Laserbearbeitungsprozesses, und
- Prozessüberwachungssystem (13), eingerichtet zum Überwachen des Laserbearbeitungsprozesses, umfassend eine Sensoreinheit (14) mit zumindest einem Sensor zum Erfassen von Prozessemissionen, und eine Steuereinheit (16), eingerichtet, um ein Verfahren nach Anspruch 12 oder 13 durchzuführen.

15. Laserbearbeitungssystem nach Anspruch 14, wobei der zumindest eine Sensor eine Photodiode mit einer spektralen Empfindlichkeit in einem vorgegebenen Wellenlängenbereich umfasst.

## Claims

1. Method for normalizing sensor signals for monitoring a laser machining process, comprising the steps:
- carrying out (S1) a predefined laser machining process by means of a laser machining system (10) for machining at least one workpiece (Wa, Wb), wherein the laser machining process comprises the machining of at least one machining region (B₁, B₂, B₃);
- generating (S2) a first sensor signal based on process emissions (22), in particular optical process emissions, detected by a first sensor for the machining region (B₁, B₂, B₃),
- determining (S3) a first mean value of the first sensor signal,
- determining (S4) a first scaling factor for the first sensor signal for the machining region (B₁, B₂, B₃) based on the first mean value.

2. Method according to claim 1, wherein the determination of the first scaling factor (S4) comprises the determination of a quotient between a first reference value and the first mean value.

3. Method according to either of the preceding claims, further comprising:
- repeating the step of carrying out the predetermined laser machining process (S1),
- generating a corresponding first sensor signal (S2) for each repetition, and determining a corresponding first mean value for each repetition,
- determining a superordinate first mean value based on the corresponding first mean values for each repetition,
wherein the determination of the first scaling factor is carried out based on the first superordinate mean value.

4. Method according to one of the preceding claims, comprising:
- generating a second sensor signal based on process emissions (22) detected by a second sensor for the machining region, wherein the first sensor and the second sensor have different spectral sensitivity ranges;
- determining a second mean value of the second sensor signal,
- determining a second scaling factor for the second sensor signal for the machining region (B₁, B₂, B₃) based on the second mean value.

5. Method according to one of the preceding claims, wherein the first sensor signal is based on an intensity of the process emissions (22) detected in a predefined wavelength range or at a predefined wavelength.

6. Method according to one of the preceding claims, wherein the first sensor signal is based on a detected intensity of temperature radiation in the infrared wavelength range, a detected intensity of plasma radiation in the visible wavelength range or a detected intensity of reflected laser radiation.

7. Method according to one of the preceding claims, wherein the determination of the mean value comprises:
- removing the smallest signal values and/or removing the largest signal values of the sensor signal, and
- determining the mean value based on the remaining signal values of the sensor signal.

8. Method according to one of the preceding claims, wherein the machining region (B₁, B₂, B₃) corresponds to a path section of a predefined machining path (P) of the laser machining process on the at least one workpiece (Wa, Wb).

9. Method according to one of the preceding claims, wherein the predefined laser machining process comprises a laser welding process, and the at least one machining region (B₁, B₂, B₃) corresponds to a weld seam, and/or wherein the predefined laser machining process comprises a laser cutting process and the at least one machining region (B₁, B₂, B₃) corresponds to a cutting edge.

10. Method according to one of the preceding claims, wherein the first scaling factor and/or second scaling factor is stored for monitoring subsequent, identical laser machining processes.

11. Method according to one of the preceding claims, wherein the method is carried out during the start-up of the laser machining system (10) and/or after replacement of a component of the laser machining system (10).

12. Method for monitoring a laser machining process, the method comprising:
- carrying out a laser machining process by means of a laser machining system for machining at least one workpiece (Wa, Wb), wherein the laser machining process comprises the machining of at least one machining region (B₁, B₂, B₃);
- generating a first sensor signal based on process emissions (22), in particular optical process emissions, detected by a first sensor for the machining region (B₁, B₂, B₃);
- scaling the first sensor signal by means of a first scaling factor determined for this laser machining system (10) and this laser machining process, and monitoring the laser machining process on the basis of the first sensor signal scaled based on the first scaling factor and on the basis of at least one predefined monitoring parameter for the first sensor signal; or
- scaling the at least one predefined monitoring parameter for the first sensor signal by means of the first scaling factor determined for this laser machining system (10) and this laser machining process, and monitoring the laser machining process on the basis of the first sensor signal and on the basis of the at least one monitoring parameter scaled based on the first scaling factor.

13. Method according to claim 12, wherein the at least one monitoring parameter for the first sensor signal is selected from the group comprising: an upper envelope curve, a lower envelope curve, an upper threshold value, a lower threshold value, a reference profile, a mean value.

14. Laser machining system (10), comprising:
- a laser machining head (12), configured for irradiating a laser beam onto a workpiece (Wa, Wb) for carrying out a laser machining process, and
- process monitoring system (13), configured for monitoring the laser machining process, comprising a sensor unit (14) with at least one sensor for detecting process emissions, and a control unit (16), configured for carrying out a method according to claim 12 or 13.

15. Laser machining system according to claim 14, wherein the at least one sensor comprises a photodiode with a spectral sensitivity in a predefined wavelength range.

## Revendications

1. Procédé de normalisation de signaux de capteur pour surveiller un processus d'usinage au laser, comprenant les étapes consistant à :
- exécuter (S1) un processus d'usinage au laser prédéterminé au moyen d'un système d'usinage au laser (10) pour usiner au moins une pièce (Wa, Wb), dans lequel le processus d'usinage au laser comprend l'usinage d'au moins une zone d'usinage (B₁, B₂ , B₃) ;
- générer (S2) un premier signal de capteur sur la base d'émissions de processus (22), en particulier d'émissions de processus optiques, détectées par un premier capteur pour la zone d'usinage (B₁, B₂, B₃),
- déterminer (S3) une première valeur moyenne du premier signal de capteur,
- déterminer (S4) un premier facteur d'échelle pour le premier signal de capteur pour la zone d'usinage (B₁, B₂, B₃) sur la base de la première valeur moyenne.

2. Procédé selon la revendication 1, dans lequel la détermination du premier facteur d'échelle (S4) comprend de déterminer un rapport entre une première valeur de référence et la première valeur moyenne.

3. Procédé selon l'une des revendications précédentes, comprenant en outre de :
- répéter l'étape d'exécution du processus d'usinage au laser prédéterminé (S1),
- générer un premier signal de capteur (S2) correspondant pour chaque répétition et déterminer une première valeur de moyenne correspondante pour chaque répétition,
- déterminer une première valeur moyenne superordonnée sur la base des premières valeurs moyennes correspondantes pour chaque répétition,
dans lequel la détermination du premier facteur d'échelle est effectuée sur la base de la première valeur moyenne superordonnée.

4. Procédé selon l'une des revendications précédentes, comprenant de :
- générer un second signal de capteur sur la base d'émissions de processus (22) détectées par un second capteur pour la zone d'usinage, dans lequel le premier capteur et le second capteur présentent des plages de sensibilité spectrale différentes ;
- déterminer une seconde valeur moyenne du second signal de capteur,
- déterminer un second facteur d'échelle pour le second signal de capteur pour la zone d'usinage (B₁, B₂, B₃) sur la base de la seconde valeur moyenne.

5. Procédé selon l'une des revendications précédentes, dans lequel le premier signal de capteur est basé sur une intensité des émissions de processus (22) détectée dans une gamme de longueurs d'onde prédéterminée ou à une longueur d'onde prédéterminée.

6. Procédé selon l'une des revendications précédentes, dans lequel le premier signal de capteur est basé sur une intensité détectée d'un rayonnement thermique dans la gamme de longueurs d'onde de l'infrarouge, une intensité détectée d'un rayonnement plasma dans la gamme de longueurs d'onde visibles ou une intensité détectée d'un rayonnement laser réfléchi.

7. Procédé selon l'une des revendications précédentes, dans lequel la détermination de la valeur moyenne comprend de :
- supprimer les plus petites valeurs de signal et/ou supprimer les plus grandes valeurs de signal du signal de capteur, et
- déterminer la valeur moyenne sur la base des valeurs de signal restantes du signal de capteur.

8. Procédé selon l'une des revendications précédentes, dans lequel la zone d'usinage (B₁, B₂, B₃) correspond à une portion de trajet d'un trajet d'usinage prédéterminé (P) du processus d'usinage au laser sur la au moins une pièce (Wa, Wb).

9. Procédé selon l'une des revendications précédentes, dans lequel le processus d'usinage au laser prédéterminé comprend un procédé de soudage au laser et correspond à la au moins une zone d'usinage (B₁, B₂, B₃) d'un cordon de soudure, et/ou dans lequel le processus d'usinage au laser prédéterminé comprend un processus de découpe au laser et correspond à la au moins une zone d'usinage (B₁, B₂, B₃) d'un bord de coupe.

10. Procédé selon l'une des revendications précédentes, dans lequel le premier facteur d'échelle et/ou le second facteur d'échelle est stocké en vue d'une surveillance de processus d'usinage au laser identiques ultérieurs.

11. Procédé selon l'une des revendications précédentes, dans lequel le procédé est mis en œuvre lors du démarrage du système d'usinage au laser (10) et/ou après le remplacement d'un composant du système d'usinage au laser (10).

12. Procédé de surveillance d'un processus d'usinage au laser, le procédé comprenant de :
- exécuter un processus d'usinage au laser au moyen d'un système d'usinage au laser pour usiner au moins une pièce (Wa, Wb), dans lequel le processus d'usinage au laser comprend l'usinage d'au moins une zone d'usinage (B₁, B₂ , B₃) ;
- générer un premier signal de capteur sur la base d'émissions de processus (22), en particulier d'émissions de processus optiques, détectées par un premier capteur pour la zone d'usinage (B₁, B₂, B₃) ;
- mettre à l'échelle le premier signal de capteur en utilisant un premier facteur d'échelle déterminé pour ce système d'usinage au laser (10) et ce processus d'usinage au laser, et surveiller le processus d'usinage au laser au moyen du premier signal de capteur mis à l'échelle sur la base du premier facteur d'échelle et au moyen d'au moins un paramètre de surveillance prédéterminé pour le premier signal de capteur ; ou
- mettre à l'échelle le au moins un paramètre de surveillance prédéterminé pour le premier signal de capteur au moyen du premier facteur d'échelle déterminé pour ce système d'usinage au laser (10) et ce processus d'usinage au laser, et surveiller le processus d'usinage au laser au moyen du premier signal de capteur et au moyen du au moins un paramètre de surveillance mis à l'échelle sur la base du premier facteur d'échelle.

13. Procédé selon la revendication 12, dans lequel le au moins un paramètre de surveillance pour le premier signal de capteur est choisi parmi le groupe comprenant : une enveloppe supérieure, une enveloppe inférieure, une valeur de seuil supérieure, une valeur de seuil inférieure, une courbe de référence, une valeur moyenne.

14. Système d'usinage au laser (10), comprenant :
- une tête d'usinage au laser (12), configurée pour projeter un faisceau laser sur une pièce (Wa, Wb) pour exécuter un processus d'usinage au laser, et
- système de surveillance de processus (13), configuré pour surveiller le processus d'usinage au laser, comprenant une unité de capteur (14) ayant au moins un capteur pour détecter des émissions de processus, et une unité de commande (16) configurée pour mettre en œuvre un procédé selon la revendication 12 ou 13.

15. Système d'usinage au laser selon la revendication 14, dans lequel le au moins un capteur comprend une photodiode ayant une sensibilité spectrale dans une gamme de longueurs d'onde prédéterminée.
